# EUROPEAN PATENT SPECIFICATION

(11) **EP 2 802 826 B1**
(45) Date of publication and mention of the grant of the patent: **26.08.2020**
(21) Application number: 13736435.2
(22) Date of filing: 09.01.2013
(51) Int. Cl.: F24S 40/52, F24S 70/30, F24S 70/20, F24S 80/60, F24S 80/50

(54) **SOLAR THERMAL COLLECTOR COMPRISING A RADIATION BASED OVERHEAT PREVENTION MECHANISM**
SONNENKOLLEKTOR MIT STRAHLUNGSBASIERTEM ÜBERHITZUNGSVERMEIDUNGSMECHANISMUS
CAPTEUR SOLAIRE À CONVERSION THERMIQUE AVEC MÉCANISME DE PRÉVENTION DE SURCHAUFFE DUE AU RAYONNEMENT

(30) Priority: 09.01.2012 US 201261584321 P
(43) Date of publication of application: 19.11.2014
(73) Proprietor: Tigi Ltd., 4927161 Petach Tikva (IL)
(72) Inventor: ADEL, Michael E., 3092814 Zichron Yaakov (IL)
(74) Representative: Algemeen Octrooi- en Merkenbureau B.V.
(86) International application number: PCT/IB2013/050183
(87) International publication number: WO 2013/105032

(56) References cited:
- WO-A2-2010/065635
- WO-A2-2011/057972
- WO-A2-2011/117256
- DE-A1- 10 306 531
- DE-A1-102008 038 795
- GB-A- 2 045 283
- US-A- 4 442 166
- US-A1- 2010 313 875
- TESFAMICHAEL T ET AL: "Treatment of antireflection on tin oxide coated anodized aluminum selective absorber surface", SOLAR ENERGY MATERIALS AND SOLAR CELLS, ELSEVIER SCIENCE PUBLISHERS, AMSTERDAM, NL, vol. 54, no. 1-4, 1 July 1998 (1998-07-01) , pages 213-221, XP004148892, ISSN: 0927-0248, DOI: 10.1016/S0927-0248(98)00073-7

## Description

### FIELD OF THE INVENTION

The present invention generally relates to solar thermal collectors comprising a system for overheat prevention.

### BACKGROUND OF THE INVENTION

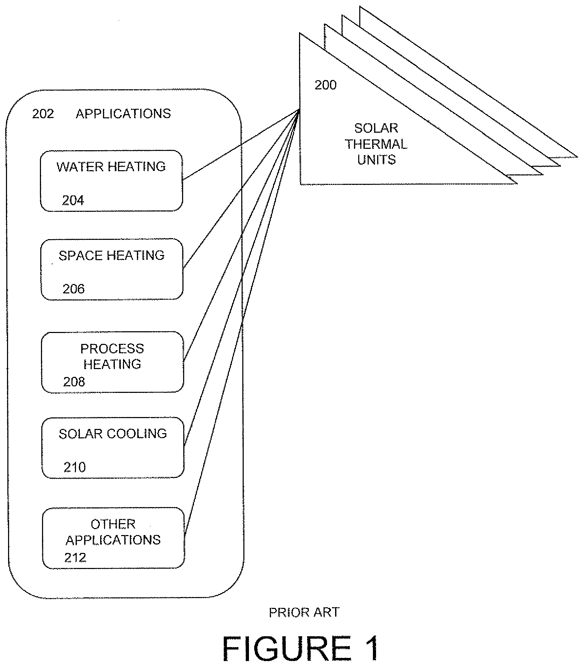

Referring to FIGURE 1, a diagram of a typical solar collecting system, solar thermal units **200,** also known as solar thermal collectors, solar energy collectors, solar panels, or solar modules, convert solar radiation to thermal energy for a variety of applications **202** within residential or industrial structures. Typical applications include water heating **204,** space-heating **206,** industrial process heating **208,** solar cooling **210,** and other applications **212.** A variety of solar thermal collectors are commercially available, and deployment, operation, and maintenance of conventional solar thermal collectors is well known in the industry. For clarity in this document, the singular term application is often used but does not imply limiting to a single application, and one ordinarily skilled in the art will understand that multiple applications are included. In the context of this document, references to the term solar collecting system generally refer to one or more solar thermal collectors, application components, and related support components.

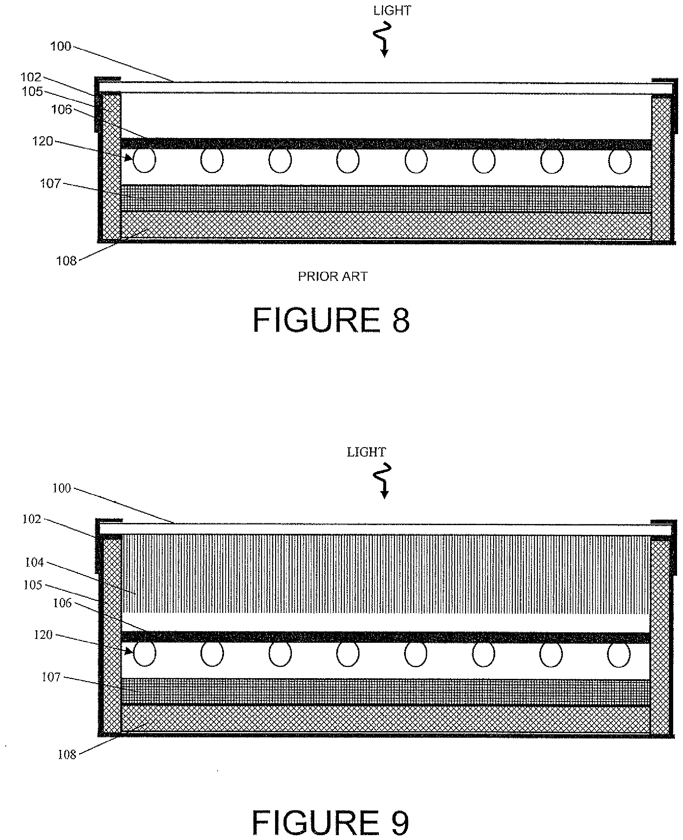

FIGURE 8 is a diagram of a cross-section view of a conventional solar thermal panel. Glass **100,** for example, low emissivity (low-E) glass, is held by a frame **102** allowing **LIGHT** (as near IR and visible wavelength light are typically referred to in this context) to reach absorber **106.** Absorber **106** is also known as an absorber plate. Absorber **106** is typically coated with an absorber coating (not shown). The absorber coating enhances absorption of light, and can have specific spectral reflectance and emittance characteristics. An exterior surface, or face, of the glass **100** that is positioned for accepting solar radiation, or in general terms facing toward the source of solar radiation is also known as the surface of the collection panel. Circulation pipes **120** (end-view as shown by circles below/behind absorber **106)** circulate a transfer fluid to absorb heat from the absorber **106** and transfer the heat to applications. Note that connections between circulation pipes **120** and applications are not shown. Note also that for clarity a single solar panel is shown. Typically, multiple solar panels are used with serial and/or parallel connections between solar panels within a solar array. In a case like this connections to and from circulation pipes of a single solar panel can be from or to (respectively) applications or one or more solar panels. Configuration and connection between solar panels and applications will be obvious to one skilled in the art. Insulation **107,** such as Melamine insulation, provides an internal insulator between the back of the absorber **106** plate and the backside of the solar panel. Lateral insulation **105** and rear thermal insulation **108** provide a thermal barrier on sides and back, respectively.

The invention of insulated solar panels provides a solar thermal collector with much greater energy conversion efficiencies, as compared to conventional solar thermal collectors. An insulated solar panel (solar thermal panel) is a solar thermal collector with a layer of transparent insulation material for the surface of the collection panel.

Referring to FIGURE 9, a diagram of an insulated solar panel, transparent insulation **104** has been integrated into a conventional solar panel between an interior surface of the collection panel ( glass **100)** and the absorber **106. LIGHT** is transmitted (passes) through transparent insulation **104** to reach absorber **106.** In this case "insulated" refers to the transparent insulation **104** material behind the surface of the collection panel - inside the solar panel, between the glass **100** and absorber **106,** as opposed to the conventional insulation typically used in the back and sides of a solar thermal collector **(105, 108).** Insulated solar panels are available from TIGI of Petah Tikva, Israel. Thermally insulating panels transmissive to solar radiation, while having low transmissivity to thermal infra-red radiation, have been disclosed in US4,480,632, US4,719,902, US4,815,442, US4,928,665, and US5,167,217 all to Klier and Novik. Greater energy conversion efficiencies are enabled particularly under conditions of substantial temperature differentials between the ambient temperature and the temperature of the circulating fluid (for example, heated water) inside the collector, for example in cold, high latitudes in winter. The thermally insulating panel, also called transparent insulation material or thermal diode, may be a honeycomb made of synthetic material or glass which is transparent to solar infrared (IR) radiation and visible wavelength light, while being partially opaque to thermal IR back-radiation, as a result of the optical properties of the material and the geometry of the material and/or the panel. In one embodiment of the invention, the transparent insulation is chosen to be substantially transparent to thermal IR back-radiation for reasons that will become clear below. At the same time, the transparent insulation material is a thermal convection suppressor as a result of the geometry and physical characteristics of the material, and a thermal conduction suppressor as a result of the thermal properties of the material, including for example, thin walls of a honeycomb.

This imbalance of the transparency to incoming solar radiation versus the thermal IR back-radiation and the restricted energy losses due to low convection and conduction create a thermal diode and enable the capturing of heat and use of that captured heat for a variety of energy applications. The use of thermal insulation panels enables much greater energy conversion efficiencies over a much broader range of ambient temperatures and conditions, especially in colder climates as compared to systems that do not use a thermal insulation panel In certain implementations, the solar absorption surface is coated with a spectrally selective layer that suppresses thermal re-emission in a particular band of the thermal infrared spectrum, obviating the need for the transparent insulation to be substantially opaque in the thermal infrared spectrum.

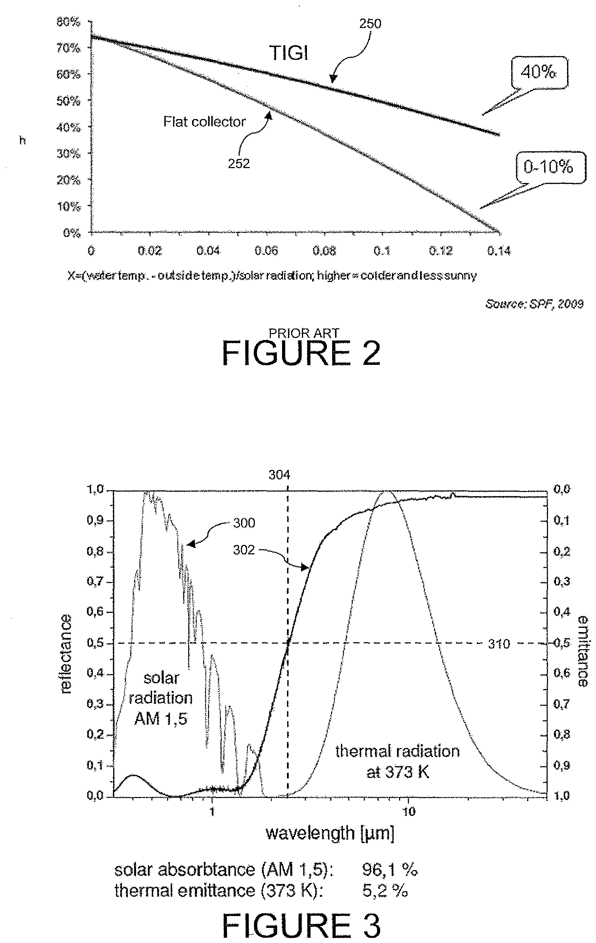

Referring to FIGURE 2, a plot of collector efficiency (h) as a function of X where X= ΔT/G, ΔT is the temperature difference between ambient and the average collector temperature and G is the global solar radiation. Higher values of X indicate colder and less sunny conditions. As can be seen from Figure 2, the insulated efficiency 250 of an insulated solar panel remains high as the environment gets colder and/or the amount of available solar radiation decreases, as compared to the conventional efficiency 252 of a conventional flat panel collector. When the efficiency of a typical conventional flat panel collector drops to about zero (for example, in the range of 0 to 10%), an insulated solar panel can still operate at an efficiency of about 40%. Greater efficiencies in insulated solar panels, while providing greater benefits than conventional solar panels also create operational and maintenance challenges that must be addressed for successful operation.

GB2015283 teaches a technique for an improved solar thermal panel absorber capable of efficiently capturing light impinging on it while minimizing radiation losses. In particular a selective solar absorber is obtained by forming a protected, graded, textured interface characterized by cavities of average depth D and of average spacing S, such that low reflectivity is achieved over a region of wave-length λ ranging from 20S ≤ λ ≤ 6D.

WO2011/117256 discloses a solar absorber having a conventional spectrally selective coating with the typical goals of low reflectivity at lower wavelengths and high reflectivity (low emissivity) at higher wavelengths.

DE 103 06 531 A1 discloses a solar thermal collector according to the preamble of claims 1 and 7.

There is therefore a need for a system to limit the internal temperature of a solar thermal collector.

### SUMMARY

According to the teachings of the present invention there is provided a solar thermal collector comprising a glass plate, an absorber, an apparatus for overheat prevention and a transparent insulation including thermal convection suppression, said insulation suppressing convective heat transfer between a glass plate and an absorber, wherein said absorber includes a spectrally selective coating having an emittance greater than 0.15 at wavelengths greater than a critical wavelength.

In an optional embodiment, the emittance is greater than 0.25 in a spectrum above a critical wavelength of the spectrally selective coating. In another optional embodiment, the critical wavelength is 2µm (micrometers).

Also according to the invention, the emittance has a critical wavelength of at least 3 µm. In another optional embodiment, the critical wavelength is substantially 4µm. In another optional embodiment, the critical wavelength is substantially 5.5µm.

In an optional embodiment, the spectrally selective coating is configured to provide the emittance using a technique selected from the group consisting of:
(i) changing a thickness of the spectrally selective coating to be greater or less than a thickness of conventional solar thermal collector absorber coatings;
(ii) changing a chemical characteristic, thicknesses, or order of a stack of a PVD, CVD, or plasma CVD coating compared to conventional solar thermal collector absorber coatings; and
(iii) changing a surface roughness as compared to conventional solar thermal collector absorber coatings.

In another optional embodiment, the solar thermal collector is a sealed collector. In another optional embodiment, the transparent insulation is substantially transparent in a band of the infrared (IR) spectrum.

### BRIEF DESCRIPTION OF FIGURES

The embodiment is herein described, by way of example only, with reference to the accompanying drawings, wherein:
FIGURE 1, a diagram of a typical solar collecting system.
FIGURE 2, a plot of collector efficiency.
FIGURE 3, a plot of absorber coating spectral emissivity characteristics.
FIGURE 4, a graph of spectral reflectance (and emittance) characteristics of an absorber plate coating for a radiative overheat protection device in the present embodiment.
FIGURE 5, a graph showing spectral radiance for a black body for various temperatures.
FIGURE 6, a graph of radiative emission dependence on absorber temperature for different absorber architectures.
FIGURE 7, a graph of collector efficiency versus collector interior temperature for a case of solar insolation at 1000 W/m² with and without the radiant overheat prevention device, FIGURE 8, a diagram of a cross-section view of a conventional solar thermal panel.
FIGURE 9, a diagram of an insulated solar panel.

### DETAILED DESCRIPTION

The principles and operation of the system according to a present embodiment may be better understood with reference to the drawings and the accompanying description. A present invention is a solar thermal collector comprising a system for limiting the internal temperature of said solar thermal collector. The system facilitates overheat protection by an innovative use of a spectrally selctive absorber coating with a higher emissivity [greater than 0.15 at wavelengts greater than a critical wavelength] or a longer (higher) critical wavelength of at least 3 *µ*m, as compared to conventional spectrally selective absorber coatings with typical emissivity in the range of values of 0.05 to 0.2 or typical critical wavelength at around 2 *µ*m.

Insulated solar panels may operate at temperatures that are typically higher than in conventional solar thermal collectors, which may damage components of the insulated solar panel. A feature of the below-described embodiments for temperature limiting in insulated solar panels is that the temperature limiting is intrinsic in the solar panel design, as opposed to conventional systems that either rely on the connected applications for temperature limiting or include actuated protection mechanisms when the temperature of the solar thermal collector exceeds a conventional operating range. Another feature of the below-described embodiments is that the embodiments can be implemented independently of the sealed components of a solar thermal collector. This feature allows isolation of internal components of a solar thermal collector from the environment, while facilitating limiting of the internal temperature via thermal coupling with the environment. Additional features facilitated by the below embodiments include implementation as passive closed systems within the sealed solar thermal collector.

In order to extend the lifetime and guarantee the performance of a solar thermal collector, solar thermal collectors are sometimes sealed, as for example with vacuum tube collectors or noble gas filled collectors. In the current embodiment, such sealing enables isolation of the internal components, such as the transparent insulation, from the environmental factors such as dust and humidity. Sealing is of particular importance in insulated solar panels, since condensation (of water) could otherwise occur on the inner surface of the collector front panel where the transparent insulation comes in contact with the transparent cover of the panel. Such condensation is difficult to remove in the presence of transparent insulation, and may produce short-term efficiency reduction and long-term degradation of the collector. In the context of this document, the term environment generally refers to the area outside of a solar thermal collector, and is also known as the ambient atmosphere. The environment includes, but is not limited to the air or vacuum surrounding a solar thermal collector and/or the material(s) to which the solar thermal collector is adjacent, including but not limited to building walls and support structures for the solar unit. Sealing reduces the risks of condensation and residual chemical contamination. The sealed enclosure also enables replacement of ambient gas within the solar thermal collector with a medium of superior thermal characteristics, (slower conduction and convection) such as Argon or Krypton. However, sealing the solar thermal collector creates new challenges, such as risks related to pressure build up and catastrophic breakdown of the enclosure. For an insulated solar panel, these risks are exacerbated by the increased volume of the solar panel due to the inclusion of a transparent insulating layer, together with the wider range of temperature fluctuation enabled by the transparent insulation.

For solar collecting systems, two temperatures are discussed: the internal temperature of the solar thermal collector and the temperature of the circulating fluid. In the context of this document, the term internal temperature refers to the temperature inside a solar thermal collector or insulated solar panel, typically in an area near or on the absorber. In the context of this document, the term absorber refers to the typically black (usually metallic high thermal conductivity) surface that is responsible for absorbing the solar radiation and converting the solar radiation to heat, which is subsequently transferred out of the system by a heat transfer fluid (circulating fluid). Under extreme conditions, the internal temperature of a solar thermal collector can reach a stagnation temperature, which is a temperature at which energy is not withdrawn from the system, or in other words solar radiation energy is being input to the panel, but no additional energy is being withdrawn from the solar collecting system via the heat transfer fluid. In the equilibrium state, the amount of solar radiation energy entering the collector is equal to the direct thermal losses of the collector via all the collector surfaces by the three known heat transfer mechanisms of conduction, convection, and radiation.

Under normal operating conditions, conventional flat panel solar thermal collectors typically operate with internal temperatures in the range of 30 to 90 degrees Celsius (°C), with stagnation temperatures of about 130 °C, up to possibly 200 °C. Conventional vacuum tube solar thermal collectors may reach a maximum operating temperature of about 130 °C, with stagnation temperatures of about 200 °C.

As mentioned above, an insulated solar panel provides a solar thermal collector with much greater energy conversion efficiencies, as compared to conventional solar thermal collectors. Correspondingly, the stagnation temperatures in an insulated solar panel are significantly higher than conventional solar thermal collectors, typically up to 250 °C, with internal temperatures of 270 to 300 °C possible. If the internal temperature of an insulated solar panel is not limited, the internal temperature could reach these significantly higher stagnation temperatures, resulting in damage to the components of the insulated solar panel. In contrast, conventional solar collecting systems typically reach stagnation at temperatures in the range of 130 to 200 °C, and are designed to withstand component damage at this range of temperatures, and hence there is no need to limit the temperature in the solar thermal collector.

The fields of solar energy collection, renewable energy, and environmentally "friendly" solutions are currently (2013) very active. Many patents and products currently exist that may use terms common to the current invention, or may have components which are similar to components used in the current invention. One skilled in the art will realize that similarity of terms, or existence of components, without more, does not anticipate the current invention.

For example, US patent 4356135 to Francois et al, for *Process for the production of a ceramic member having inclusions of electrically conductive material flush with its surface,* teaches a general background on spectrally selective coating, but does not disclose how such a coating can be modified to enable overheat protection of a solar collector.

Similarly, US patent 4034129 to Kittle for *Method for forming an inorganic thermal radiation control,* teaches a general background on spectrally selective coating, but does not disclose how such a coating can be modified to enable overheat protection of a solar collector.

EP 0059087 to Masao et al, for c*oating compositions for solar selective absorption,* teaches details of how to construct a particular selective coating, but does not teach the use of this coating as an overheat prevention mechanism.

WO 2009/115062 TO Kulhayy for solar collector of a flat plate design with heat transfer fluid and freeze protection, teaches a solar panel design using elastic material for freeze protection, but does not teach techniques for overheat prevention.

US6530369 to Yogev et al for *Solar energy plant,* teaches a solar radiation concentration system, where incident solar radiation is reflected by two reflectors: a field of Heliostats and a tower reflector. In this architecture, the overheat risk is at the tower reflector and the thermal load on this load is managed by modifying the absorption characteristics of the heliostats such that any solar radiation in spectral band that would otherwise be absorbed by the tower reflector is first absorbed by the large field of distributed heliostats. This patent does not teach the use of a spectrally selective layer for overheat protection in the collector.

There is a significant advantage to having an overheat prevention solution at the collector level as opposed to the system level, since a solution at the collector level obviates the need for additional hardware to be installed at the system level, for instance a heat dump operating on the primary heat transfer loop. Furthermore, common practice is to install so-called drain-back systems in order to avoid the risk of pipe damage due to freezing ambient winter temperatures. This is desirable as drain-back systems enable the replacement of glycol with water as the primary heat transfer fluid since the anti-freeze characteristics of glycol are no longer necessary. There is however a major risk factor with such drain-back systems, since in the absence of any fluid in the primary loop, collector temperature can rapidly rise and reach stagnation, causing collector damage. This risk factor is removed if a collector level overheat protection device (OPD) is implemented.

### Collector Level Overheat Protection Devices (OPDs)

Previously disclosed methods of overheat prevention include using a loop heat pipe as a passive thermal switch, where the temperature induced action at a pre-determined temperature, designated T0, causes an abrupt transition from a state of thermal isolation from the environment to a state of strong thermal coupling. For example, WO/2011/086534 to Klier et al for *System and method for temperature limiting in a sealed solar energy collector,* and WO/2012/110916 to Klier et al for *Overheat protection mechanism for solar thermal collector.* The loop heat pipe includes an independent circulating system with a separate fluid from the primary loop, which transfers heat from the collector to an application. A first section of the heatpipe, which functions as the evaporator, is typically a harp pipe that is thermally coupled to the absorber plate of the collector. In this configuration, the heat pipe evaporator is an independent structure from the primary heat transfer loop of the collector. A second section of the heatpipe, which functions as a condenser, is a radiator (or any other convenient configuration such as serpentine piping) which is thermally coupled to the atmosphere. Although this solution is highly effective in limiting the stagnation temperature of the collector, this solution requires substantial additional components and piping to be included in the bill of materials of the collector, affecting cost. There is therefore a need for a lower cost solution to the overheating problem of insulated solar thermal collectors (insulated thermal panels).

In the following section, a typical implementation of a primary embodiment of the present invention will be described. Although many particular specifications are provided these specifications are by way of example and should not be considered limiting in any way. To operate an insulated solar panel at the above-described temperatures and prevent damage to the insulated solar panel and solar collecting system, innovative solutions are required to limit the stagnation temperature of the insulated solar panel. In the section that follows, a solution will be presented that overcomes the overheating problem. Note however, that this solution may also be implemented in any other solar thermal collector such as a conventional flat plate collector. In the present embodiment, the solution includes using radiative emission as a passive thermal transition mechanism, where the temperature induced action in a pre-determined temperature range, causes a steep transition from a state of thermal isolation from the environment to a state of strong thermal coupling.

### Spectrally selective coatings and the critical wavelength

Referring to FIGURE 3, a plot of absorber coating spectral emissivity characteristics, the spectral characteristics of a spectrally selective coating are shown. This figure is adapted from ALANOD-SOLAR (Ennepetal, Germany) Image Brochure. In order to understand the principles of operation of the embodiment it is important to first review the state of the art spectrally selective coatings currently in use in conjunction with absorber plates in modern solar thermal collectors (spectrally selective absorber coatings). The spectral characteristics of solar radiation at ground level are shown as plot **300.** The current figure graphs absorber coating spectral emissivity characteristics typical in the state of the art (plot **302).** The coating has high absorbance (low reflectance, and hence high emissivity, as emittance equals absorbance for opaque materials) in the short wavelength range, in this case out to ∼ 2*µ*m (micrometers), in order to ensure high solar collection efficiency. The coating transitions to low absorbance (high reflectance and low emissivity) at around the 2*µ*m wavelength so that radiative losses in the infrared are minimized, as the temperature of the collector rises. In other words, the spectrally selective coating transitions to very low emittance at longer wavelengths in order to minimize radiative thermal losses in the infrared. This transition in the spectral characteristics is termed the critical wavelength (shown as dashed-line **304** at 2*µ*m for a conventional coating), where the absorbance crosses the 50% mark (shown as dashed-line **310).** Critical wavelength is also referred to in the field as "cut on". Note that the term "emittance" can be used to refer to a specific emittance, for example at a specific wavelength, or can be used to refer to the characteristic (of) emittance, for example a plot of emittance versus wavelength, of a material. The use of the term "emittance" (and related terms emissivity and reflectance) for a specific emittance or characteristic emittance will be obvious to one skilled in the art based on the context and use of the term.

Techniques for modifying the characteristics (also known as operational parameters) of spectrally selective solar absorber coatings, including designing the spectrally selective coating to have a desired critical wavelength, are known in the art. See for example "The preparation and testing of spectrally selective paints on different substrates for solar absorbers", by Orel et al, Solar Energy Vol. 69(Suppl.), Nos. 1-6, pp. 131-135, 2000. This paper shows, for example, that changing the thickness (measured in grams per square meter) of the applied spectrally selective paint modifies the efficiency and stagnation temperature of the collector. As is clear from this publication, the conventional wisdom is that a coating that produces a higher stagnation temperature is desirable over a lower stagnation temperature due to the associated improvements in efficiency at elevated temperatures.

In contrast, an objective of the present invention is contrary to conventional practice, specifically, to lower the stagnation temperature. As stated above, a flat plate collector with transparent insulation has substantially suppressed convective and conductive heat losses compared with conventional flat plate collectors without transparent insulation. As a result, in a transparent insulated solar panel the dominant mechanism of heat loss to the environment is radiative. It is known in the art that convective and conductive heat losses follow a linear dependence on collector interior temperature for a given ambient temperature. On the other hand, radiative heat losses, for the case of a blackbody (ε =1) or grey body (ε < 1, but spectrally independent) behave according to the Stefan-Boltzmann relationship, i.e. proportional to T⁴, where T is the body temperature in Kelvin. This is already advantageous over a linear dependence, since at low (typical operational) temperatures substantially below 100 °C, the radiative heat losses are minimal. By way of example, for a black plate absorber of emissivity 0.1, the radiative emission would be 60 Wm⁻² at 50 °C, which is ∼ 6% of the incoming insolation for 1000 Wm⁻² solar irradiance. However, the same absorber plate would re-radiate ∼ 240 Wm⁻² at 180 °C that is about 25% of the incoming insolation under the same conditions. For a typical solar thermal collector without transparent insulation, this would be enough to bring the collector to stagnation. However, for a solar thermal collector with transparent insulation, the substantially suppressed convective and conductive heat losses would result in a considerably higher stagnation temperature, possibly above 250 °C. Hence, an objective of the current embodiment to modify the emissivity of the absorber plate in the infrared range so as to enhance the radiative losses at higher temperatures and bring the collector to stagnation at absorber temperatures preferably below 200 °C.

Design and manufacture of spectrally selective coatings are known in the art, specifically including techniques for adjusting the critical wavelength of the coating. Based on the current description, one skilled in the art will be able to produce and deploy a spectrally selective coating with the required and/or desired characteristics for the current invention.

Non-limiting examples of techniques that can be used to provide a specific emittance (specific and/or desired emittance characteristics) for a spectrally selective coating include:
changing a thickness of the spectrally selective coating to be greater or less than a thickness of conventional solar thermal collector absorber coatings;
changing a chemical characteristic, thicknesses, and/or an order of a stack of a PVD, CVD, or plasma CVD coating compared to conventional solar thermal collector absorber coatings; and
changing a surface roughness as compared to conventional solar thermal collector absorber coatings.

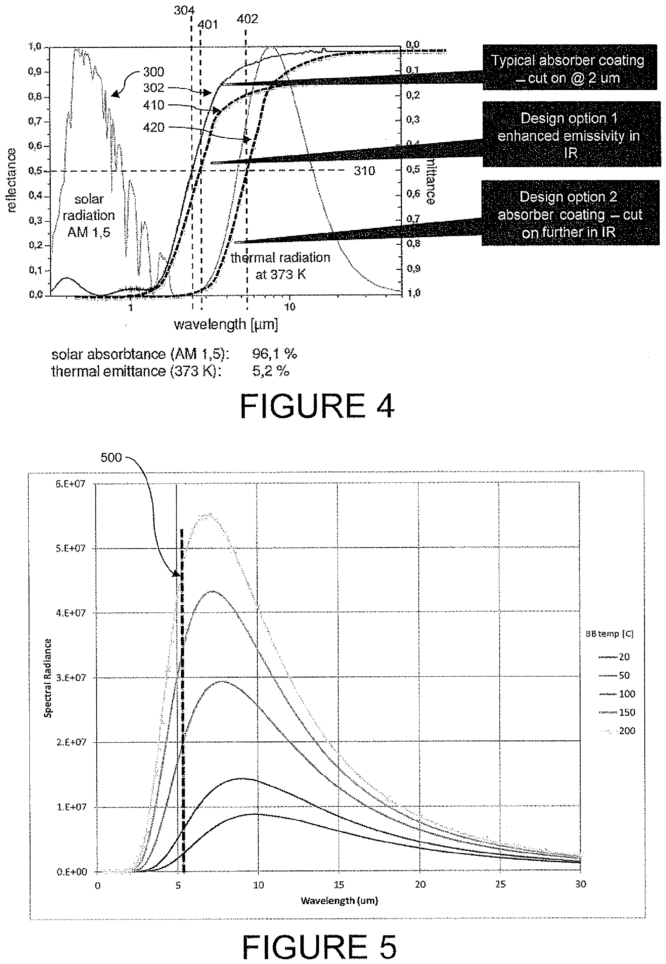

Examples of how such a coating could be modified in the present embodiment are shown in FIGURE 4, a graph of spectral reflectance (and emittance) characteristics of an absorber plate coating for a radiative overheat protection device in the present embodiment. Two example design embodiments are shown, but the embodiments may also be combined. Two different design options for how the coating can be modified will now be described.

In a first option, the emissivity of the spectrally selective absorber coating in the infrared, above *2µ*m is increased from typical values of 0.05 to 0.1 to values between 0.1 and up to 0.25 by, for example, modifying the thickness of the coating. Alternately, a modified stack of dielectric and/or metallic layers may be deposited by known deposition processes such as PVD (physical vapor deposition), cVD) chemical vapor deposition), or plasma chemical vapor deposition, etc. This results in higher thermal re-emission with temperature, scaled proportionally to the emissivity increase, as described below. For example, increasing the IR emissivity to 0.2 would bring the thermal re-radiation to ~480 Wm⁻² at 180 °C, which is sufficient to bring even a transparent insulation equipped solar collector to stagnation at this absorber temperature. In contrast, conventional absorber plates could reach stagnation temperatures above 250 °C. A plot of spectral reflectance (and emittance) characteristics of this first option is shown as dashed plot **410** having critical wavelength **401.**

Referring again to FIGURE 8 and FIGURE 9, in general, an apparatus for overheat prevention in a solar thermal collector includes an absorber **106** configured with a spectrally selective absorber coating. A characteristic of the spectrally selective absorber coating is an emissivity greater than 0.25 in the infrared (IR) spectrum above 2*µ*m (micrometers).

In a second design option, the coating demonstrates a spectral transition from high absorbance to low absorbance at a longer wavelength than for a standard absorber coating. In other words, having a higher absorbance, as compared to the absorbance of standard coatings, at longer wavelengths (wavelengths that are a portion of the thermal IR spectrum). A plot of spectral reflectance (and emittance) characteristics of this second option is shown in FIGURE 4 as dashed plot **420** having critical wavelength **402.** So for example, a typical solar thermal collector coating would use a critical wavelength transition around 2*µ*m (shown as **304).** However, in the present embodiment, the critical wavelength is at least 3 *µ*m, preferably in the range of 3 to 8*µ*m. A preferable implementation uses a critical wavelength of at least 4 *µ*m. In the current example of option two, the transition occurs at a most preferable critical wavelength of substantially 5.5*µ*m (critical wavelength **402).** In other words, equal to or greater than 4 *µ*m and 5.5 *µ*m. As the current figure shows, and one skilled in the art will be aware, the emittance (emittance curve/characteristic) of a spectrally selective coating varies with wavelength.

The impact of this option can be understood with reference to FIGURE 5, a graph showing spectral radiance for a black body for various temperatures. The amount of radiation on the short wavelength side (left side) of the dashed line **500** rises very steeply with temperature. In this context, very steeply is with a greater than 4^{th} order polynomial dependence on temperature. The integrated spectral radiance on the short wavelength side of the dotted line **500** rises very steeply with temperature, with a rough dependence of exponent ∼6.5 - higher than the so-called Stefan-Boltzmann relationship. The Stefan-Boltzmann relationship states that the integrated radiant emission of a black body over the full spectral range as a function of temperature follows a power law with an exponent of 4.

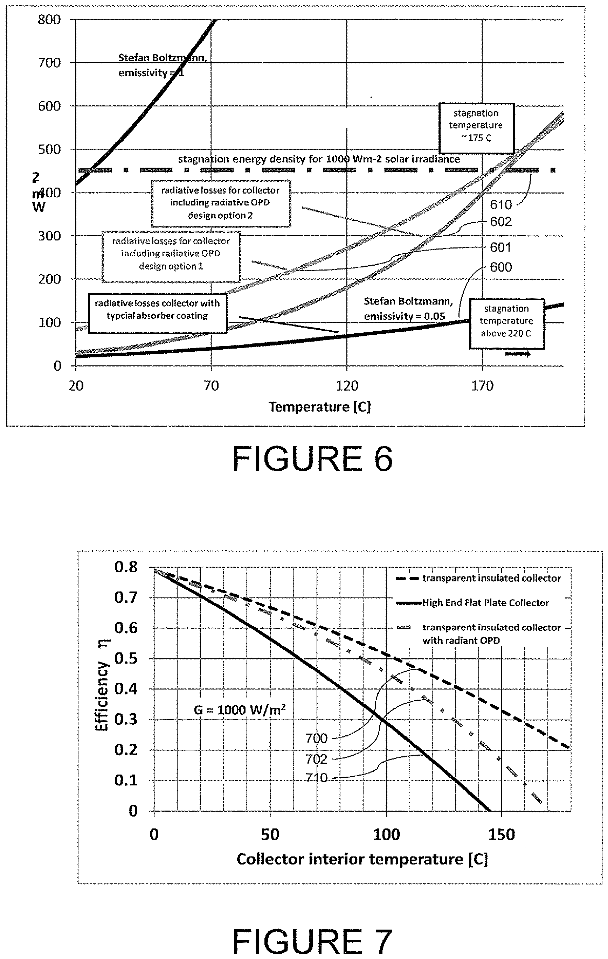

Referring to FIGURE 6, a graph of radiative emission (vertical axis in Wm⁻²) dependence on absorber temperature (horizontal axis in °C) for different absorber architectures, the integrated emission as a function of temperature is shown. Curve **600** shows radiative losses from a collector (solar thermal collector) with typical absorber coating. Curve **601** shows radiative losses for a collector including radiative OPD design option 1. Curve **602** shows radiative losses for a collector including radiative OPD design option 2. Note there is a steep increase in radiative losses for the radiative OPD design options of the present embodiment, as compared to using a typical absorber coating (curve **600).** Stagnation energy density **(610,** shown on the graph as horizontal dashed line at about 450 Wm⁻²) is for 1000 Wm⁻² insolation and a transparent insulated solar panel. As can be seen from the current graph and description, the 5.5*µ*m critical wavelength cut-on of the above example of design option 2 enables a much steeper temperature dependence and hence transition from thermal isolation from the environment to strong thermal coupling, compared with a conventional collector. One method that is appropriate for achieving a shift in the critical wavelength into the infrared, (or increasing the overall emissivity in the infrared) is by applying thicker coatings of a spectrally selective coating, than the thicknesses conventionally used. So for example, increasing the coating thickness of the coating from a typical aerial density of 1.5 g/m² to above 3 g/m² can shift the critical wavelength from 2*µ*m substantially into the infrared, say beyond 3*µ*m. An example of such a coating is Suncolor TSS, manufactured by Helios Group of Domzale Slovenia.

Referring to FIGURE 7, a graph of collector efficiency versus collector interior temperature for a case of solar insolation at 1000 W/m² with and without the radiant overheat prevention device, an example of the effect of the second design option of the so called radiative overheat prevention device on collector efficiency (curve **702)** as a function of collector interior temperature. The efficiency performance up to a temperature of ∼ 80 °C (degrees Celsius) is substantially similar to that of an insulated flat plate collector (curve **700).** However, above this temperature, the collector efficiency rapidly drops off as the collector interior temperature rises above 100 °C, shedding energy to the environment by enhanced radiative means, reaching stagnation at 170 °C, well below the stagnation temperatures of 240 °C typical of other insulated flat plate collectors. For reference, curve **710** shows the collector efficiency of a conventional high-end flat-plate collector.

Referring again to FIGURE 8 and FIGURE 9, in general, an apparatus for overheat prevention in a solar thermal collector includes an absorber **106** configured with a spectrally selective absorber coating. A characteristic of the spectrally selective absorber coating is a critical wavelength in the range of at least 3*µ*m.

The use of simplified calculations to assist in the description of this embodiment does not detract from the utility and basic advantages of the invention.

It should be noted that the above-described examples, numbers used, and exemplary calculations are to assist in the description of this embodiment. Inadvertent typographical and mathematical errors do not detract from the utility and basic advantages of the invention.

It will be appreciated that the above descriptions are intended only to serve as examples, and that many other embodiments are possible within the scope of the present invention as defined in the appended claims.

## Claims

1. A solar thermal collector comprising a glass plate (100), an absorber (106), an apparatus for overheat prevention and a transparent insulation (104) including thermal convection suppression, said insulation suppressing convective heat transfer between said glass plate (100) and said absorber (106), **characterized in that** said absorber (106) includes a spectrally selective coating with an emittance greater than 0.15 at wavelengths greater than a critical wavelength.

2. The apparatus of claim 1 wherein said emittance is greater than 0.25 in a spectrum above a critical wavelength of said spectrally selective coating.

3. The apparatus of claim 2 wherein said critical wavelength is 2 µm (micrometers).

4. The apparatus of claim 1 wherein said emittance is greater than 0.5 beyond said critical wavelength being equal to or greater than 5.5 µm.

5. The apparatus of claim 1 wherein said critical wavelength is equal to or greater than 5.5 µm.

6. The apparatus of claim 3 wherein said spectrally selective coating is configured to provide said emittance using a technique selected from the group consisting of:
(i) changing a thickness of said spectrally selective coating to be greater or less than a thickness of conventional solar thermal collector absorber coatings;
(ii) changing a chemical characteristic, thicknesses, or order of a stack of a PVD, CVD, or plasma CVD coating compared to conventional solar thermal collector absorber coatings; and
(iii) changing a surface roughness as compared to conventional solar thermal collector absorber coatings.

7. A solar thermal collector comprising a glass plate (100), an absorber (106), an apparatus for overheat prevention and a transparent insulation (104) including thermal convection suppression, said insulation suppressing convective heat transfer between said glass plate (100) and said absorber (106), **characterized in that** said absorber (106) includes a spectrally selective coating with a critical wavelength greater than 3 µm.

8. The apparatus of claim 7 wherein said emittance is greater than 0.5 beyond said critical wavelength being equal to or greater than 5.5 µm.

9. The apparatus of claim 7 wherein said critical wavelength is equal to or greater than 5.5 µm.

10. The apparatus of any of the above claims wherein said solar thermal collector is a sealed collector.

11. The apparatus of claim 10 wherein said transparent insulation is transparent in a band of the infrared (IR) spectrum.

12. The apparatus of claim 7 wherein said spectrally selective coating is configured to provide said emittance using a technique selected from the group consisting of:
(i) changing a thickness of said spectrally selective coating to be greater or less than a thickness of conventional solar thermal collector absorber coatings;
(ii) changing a chemical characteristic, thicknesses, or order of a stack of a PVD, CVD, or plasma CVD coating compared to conventional solar thermal collector absorber coatings; and
(iii) changing a surface roughness as compared to conventional solar thermal collector absorber coatings.

## Patentansprüche

1. Solarwärmekollektor, umfassend eine Glasplatte (100), einen Absorber (106), eine Vorrichtung zur Verhinderung von Überhitzung und eine transparente Isolierung (104) mit Unterdrückung thermischer Konvektion, wobei die besagte Isolierung die konvektive Wärmeübertragung zwischen der besagten Glasplatte (100) und dem besagten Absorber (106) unterdrückt, **dadurch gekennzeichnet, dass** der besagte Absorber (106) eine spektralselektive Beschichtung mit einem Emissionsgrad von mehr als 0,15 bei Wellenlängen größer als eine kritische Wellenlänge aufweist.

2. Vorrichtung nach Anspruch 1, wobei der besagte Emissionsgrad in einem Spektrum oberhalb einer kritischen Wellenlänge der besagten spektralselektiven Beschichtung größer als 0,25 ist.

3. Vorrichtung nach Anspruch 2, wobei die besagte kritische Wellenlänge 2 µm (Mikrometer) beträgt.

4. Vorrichtung nach Anspruch 1, wobei der besagte Emissionsgrad größer als 0,5 jenseits der besagten kritischen Wellenlänge ist, die gleich oder größer als 5,5 µm ist.

5. Vorrichtung nach Anspruch 1, wobei die besagte kritische Wellenlänge gleich oder größer als 5,5 µm ist.

6. Vorrichtung nach Anspruch 3, wobei die besagte spektralselektive Beschichtung dafür konfiguriert ist, den besagten Emissionsgrad unter Verwendung einer Technik bereitzustellen, die ausgewählt ist aus der Gruppe bestehend aus:
(i) Ändern der Dicke der besagten spektralselektiven Beschichtung so, dass sie größer oder kleiner ist als die Dicke herkömmlicher Absorberschichten für Solarwärmekollektoren;
(ii) Ändern einer chemischen Eigenschaft, Dicke oder Reihenfolge eines Stapels einer PVD-, CVD- oder Plasma-CVD-Beschichtung im Vergleich zu herkömmlichen Absorberschichten für Solarwärmekollektoren; und
(iii) Ändern einer Oberflächenrauhigkeit im Vergleich zu herkömmlichen Absorberschichten für Solarwärmekollektoren.

7. Solarwärmekollektor, umfassend eine Glasplatte (100), einen Absorber (106), eine Vorrichtung zur Verhinderung von Überhitzung und eine transparente Isolierung (104) mit Unterdrückung thermischer Konvektion, wobei die besagte Isolierung die konvektive Wärmeübertragung zwischen der besagten Glasplatte (100) und dem besagten Absorber (106) unterdrückt, **dadurch gekennzeichnet, dass** der besagte Absorber (106) eine spektralselektive Beschichtung mit einer kritischen Wellenlänge von mehr als 3 µm aufweist.

8. Vorrichtung nach Anspruch 7, wobei der besagte Emissionsgrad größer als 0,5 jenseits der besagten kritischen Wellenlänge ist, die gleich oder größer als 5,5 µm ist.

9. Vorrichtung nach Anspruch 7, wobei die besagte kritische Wellenlänge gleich oder größer als 5,5 µm ist.

10. Vorrichtung nach einem der oben genannten Ansprüche, wobei der besagte Solarwärmekollektor ein geschlossener Kollektor ist.

11. Vorrichtung nach Anspruch 10, wobei die besagte transparente Isolierung in einem Band des Infrarot (IR)-Spektrums transparent ist.

12. Vorrichtung nach Anspruch 7, bei der die besagte spektralselektive Beschichtung dafür konfiguriert ist, den besagten Emissionsgrad unter Verwendung einer Technik bereitzustellen, die ausgewählt ist aus der Gruppe bestehend aus:
(i) Ändern der Dicke der besagten spektralselektiven Beschichtung so, dass sie größer oder kleiner ist als die Dicke herkömmlicher Absorberschichten für Solarwärmekollektoren;
(ii) Ändern einer chemischen Eigenschaft, Dicke oder Reihenfolge eines Stapels einer PVD-, CVD- oder Plasma-CVD-Beschichtung im Vergleich zu herkömmlichen Absorberschichten für Solarwärmekollektoren; und
(iii) Ändern einer Oberflächenrauhigkeit im Vergleich zu herkömmlichen Absorberschichten für Solarwärmekollektoren.

## Revendications

1. Capteur solaire thermique comprenant une plaque de verre (100), un absorbeur (106), un appareil de prévention de surchauffe et une isolation transparente (104) comportant une suppression de convection thermique, ladite isolation supprimant le transfert de chaleur convectif entre ladite plaque de verre (100) et ledit absorbeur (106), **caractérisé en ce que** ledit absorbeur (106) comporte un revêtement spectralement sélectif présentant une émittance supérieure à 0,15 à des longueurs d'onde supérieures à une longueur d'onde critique.

2. Appareil selon la revendication 1, dans lequel ladite émittance est supérieure à 0,25 dans un spectre au-dessus d'une longueur d'onde critique dudit revêtement spectralement sélectif.

3. Appareil selon la revendication 2, dans lequel ladite longueur d'onde critique est de 2 µm (micromètres).

4. Appareil selon la revendication 1, dans lequel ladite émittance est supérieure à 0,5 au-delà de ladite longueur d'onde critique étant supérieure ou égale à 5,5 µm.

5. Appareil selon la revendication 1, dans lequel ladite longueur d'onde critique est supérieure ou égale à 5,5 µm.

6. Appareil selon la revendication 3, dans lequel ledit revêtement spectralement sélectif est configuré pour fournir ladite émittance au moyen d'une technique choisie dans le groupe constitué par :
(i) la modification d'une épaisseur dudit revêtement spectralement sélectif afin qu'elle soit supérieure ou inférieure à une épaisseur de revêtements d'absorbeurs de capteurs solaires thermiques classiques ;
(ii) la modification d'une caractéristique chimique, des épaisseurs ou de l'ordre d'un empilement d'un revêtement PVD, CVD ou CVD plasma par rapport aux revêtements d'absorbeurs de capteurs solaires thermiques classiques ; et
(iii) la modification d'une rugosité de surface par rapport aux revêtements d'absorbeurs de capteurs solaires thermiques classiques.

7. Capteur solaire thermique comprenant une plaque de verre (100), un absorbeur (106), un appareil de prévention de surchauffe et une isolation transparente (104) comportant une suppression de convection thermique, ladite isolation supprimant le transfert de chaleur convectif entre ladite plaque de verre (100) et ledit absorbeur (106), **caractérisé en ce que** ledit absorbeur (106) comporte un revêtement spectralement sélectif ayant une longueur d'onde critique supérieure à 3 µm.

8. Appareil selon la revendication 7, dans lequel ladite émittance est supérieure à 0,5 au-delà de ladite longueur d'onde critique étant supérieure ou égale à 5,5 µm.

9. Appareil selon la revendication 7, dans lequel ladite longueur d'onde critique est supérieure ou égale à 5,5 µm.

10. Appareil selon l'une quelconque des revendications précédentes, dans lequel ledit capteur solaire thermique est un capteur étanche.

11. Appareil selon la revendication 10, dans lequel ladite isolation transparente est transparente dans une bande du spectre infrarouge (IR).

12. Appareil selon la revendication 7, dans lequel ledit revêtement spectralement sélectif est configuré pour fournir ladite émittance au moyen d'une technique choisie dans le groupe constitué par :
(i) la modification d'une épaisseur dudit revêtement spectralement sélectif afin qu'elle soit supérieure ou inférieure à une épaisseur de revêtements d'absorbeurs de capteurs solaires thermiques classiques ;
(ii) la modification d'une caractéristique chimique, des épaisseurs ou de l'ordre d'un empilement d'un revêtement PVD, CVD ou CVD plasma par rapport aux revêtements d'absorbeurs de capteurs solaires thermiques classiques ; et
(iii) la modification d'une rugosité de surface par rapport aux revêtements d'absorbeurs de capteurs solaires thermiques classiques.
